# EUROPEAN PATENT APPLICATION

(11) **EP 4 300 346 A1**
(43) Date of publication of application: **03.01.2024**
(21) Application number: 21927584.9
(22) Date of filing: 01.11.2021
(51) Int. Cl.: G06F 30/20, G06F 111/10

(54) **METHOD AND SYSTEM FOR CALCULATING PASSIVE LUNAR CALIBRATION OCCASION OF LOW-EARTH-ORBIT SATELLITE**

(30) Priority: 26.02.2021 CN 202110219884
(71) Applicant: DFH Satellite Co., Ltd., Beijing 100094 (CN)
(72) Inventor: WANG, Chao, Beijing 100094 (CN); LI, Yongchang, Beijing 100094 (CN); ZHAO, Hongzhi, Beijing 100094 (CN); ZHANG, Keli, Beijing 100094 (CN); WANG, Lili, Beijing 100094 (CN)
(74) Representative: Maiwald GmbH
(86) International application number: PCT/CN2021/127951
(87) International publication number: WO 2022/179160

(57) **Abstract**

A method and system for calculating a passive lunar calibration occasion of a low-earth-orbit satellite. The method comprises: establishing an STK simulation scenario (101); constructing three vectors in the STK simulation scenario (102), wherein a first vector is cold space field of view start vector, a second vector is a cold space field of view end vector, and a third vector is a vector from a satellite body to the moon; obtaining and outputting real-time angle values of included angle α₁, included angle α₂, and included angle θ₃ in real time (103), wherein the included angle α₁ is an included angle between the first vector and the third vector, the included angle α₂ is an included angle between the second vector and the third vector, and the included angle θ₃ is an included angle between the first vector and the second vector; and according to the real-time angle values of the included angle α₁, the included angle α₂, and the included angle α₃, determining the relationship among the included angle α₁, the included angle α₂, and the included angle θ₃, and determining a lunar calibration occasion (104). According to the method, parameters such as the lunar calibration occasion are analyzed, and data support is provided for long-term monitoring of the stability of a remote sensing satellite detector and for subsequent establishment of a Chinese lunar radiation model.

## Description

This application, is based on and claims priority to Chinese Patent Application No. 202110219884.X, titled "METHOD AND SYSTEM FOR CALCULATING PASSIVE LUNAR CALIBRATION TIMING OF LOW-EARTH-ORBIT SATELLITE", filed on February 26, 2021, the entire contents of which are in the disclosure by reference.

### TECHNICAL FIELD

The disclosure relates to a field of satellite remote sensing technologies, and particularly to a method and a system for calculating a passive lunar calibration timing of a low-earth-orbit satellite.

### BACKGROUND

MODIS, SeaWiFS, Pleades, Pleiades and GOES and FY-3 MERSI all have an on-orbit lunar calibration capability. A satellite on-orbit lunar calibration mode is divided into an active mode and a passive mode. The passive mode needs a satellite to actively perform attitude maneuver or load scanning mirror pointing tracking, to adjust a field of view of a detector to point to the moon for imaging calibration. Although a calibration period and a calibration efficiency are higher, requirements for an operating mode and task arrangement of the satellite are strict, and part of the satellites cannot adopt the active mode due to an attitude maneuver capability and a load mode.

### SUMMARY

In order to overcome defects of the related art, a method and a system for calculating a passive lunar calibration timing of a low-earth-orbit satellite are provided, which analyzes parameters such as a lunar calibration timing, and provides data support for long-term monitoring of stability of a remote sensing satellite detector and subsequent establishment of a Chinese lunar radiation model.

In order to solve the above technical problem, a method for calculating a passive lunar calibration timing of a low-earth-orbit satellite is disclosed, and includes:
establishing a satellite tool kit (STK) simulation scene;
constructing three vectors in the STK simulation scene, in which a first vector is a deep space field of view start vector, a second vector is a deep space end vector, and a third vector is a vector from the satellite to the moon;
acquiring and outputting real-time angle values of an included angle α₁, an included angle α₂ and an included angle θ₃ in real time, in which the included angle α₁ is an included angle between the first vector and the third vector, the included angle α₂ is an included angle between the second vector and the third vector, and the included angle θ₃ is an included angle between the first vector and the second vector; and
determining a relationship among the included angle α₁, the included angle α₂ and the included angle α₃, and determining the lunar calibration timing, according to the real-time angle values of the included angle α₁, the included angle α₂ and the included angle α₃.

In the method for calculating the passive lunar calibration timing of the low-earth-orbit satellite, establishing the STK simulation scene includes:
acquiring an orbit semi-major axis, an eccentricity, an orbit inclination angle, an argument of perigee, a right ascension of ascending node and a mean anomaly; and
establishing the STK simulation scene by taking the orbit semi-major axis, the eccentricity, the orbit inclination angle, the argument of perigee, the right ascension of ascending node and the mean anomaly as input parameters of the STK.

In the method for calculating the passive lunar calibration timing of the low-earth-orbit satellite, constructing the three vectors in the STK simulation scene includes:
establishing a circumferential scanning disk coordinate system O-XYZ by taking a scanning center as an origin O, in which an X-axis is a flight direction perpendicular outwardly to a paper surface, a Z-axis points to a geocenter, and a Y-axis constitutes a right-handed system with the X-axis and the Z-axis;
determining a sub-satellite point imaging vector Sub_point_ vector, wherein the sub-satellite point imaging vector Sub_point_vector coincides with the Z-axis, with the origin O as a start point;
constructing a deep space field of view start vector Start_vector by rotating the sub-satellite point imaging vector Sub_point_vector counterclockwise at an angle θ₁ towards an X direction;
constructing a deep space end vector End_vector by rotating the sub-satellite point imaging vector Sub_point_ vector counterclockwise at an angle θ₂ towards an X direction; and
constructing a vector from the satellite to the moon sat2moon_vector by taking the origin O as a start point and a moon center Oₘ, as an end point.

In the method for calculating the passive lunar calibration timing of the low-earth-orbit satellite, values of the angle θ₁ and the angle θ₂ are determined based on a load requirement.

In the method for calculating the passive lunar calibration timing of the low-earth-orbit satellite, determining the relationship among the included angle α₁, the included angle α₂ and the included angle α₃, and determining the lunar calibration timing, according to the real-time angle values of the included angle α₁, the included angle α₂ and the included angle α₃, includes:
in response to determining α₁+α₂=θ₃ according to the real-time angle values of the included angle α₁, the included angle α₂ and the included angle α₃, determining that the moon enters the deep space field of view, and taking a current UTC time as the lunar calibration timing.

In the method for calculating the passive lunar calibration timing of the low-earth-orbit satellite, while acquiring and outputting the real-time angle values of the included angle α₁, the included angle α₂ and the included angle θ₃ in real time, the method further includes: acquiring and outputting the current UTC time and a current sub-satellite point longitude and latitude.

In the method for calculating the passive lunar calibration timing of the low-earth-orbit satellite, after taking the current UTC time as the lunar calibration timing, the method further includes: determining and outputting a sub-satellite point longitude and latitude corresponding to the current UTC time.

In the method for calculating the passive lunar calibration timing of the low-earth-orbit satellite, steps of establishing the STK simulation scene, constructing the three vectors in the STK simulation scene and acquiring and outputting the real-time angle values of the included angle α₁, the included angle α₂ and the included angle θ₃ in real time are achieved in an STK software.

In the method for calculating the passive lunar calibration timing of the low-earth-orbit satellite, a step of determining the relationship among the included angle α₁, the included angle α₂ and the included angle α₃, and determining the lunar calibration timing, according to the real-time angle values of the included angle α₁, the included angle α₂ and the included angle θ₃, may be achieved in a MATLAB software.

Correspondingly, a system for calculating a passive lunar calibration timing of a low-earth-orbit satellite is further provided in the disclosure, and includes:
a simulation module, configured to establish a satellite tool kit (STK) simulation scene;
a vector constructing module, configured to construct three vectors in the STK simulation scene, in which a first vector is a deep space field of view start vector, a second vector is a deep space end vector, and a third vector is a vector from the satellite to the moon;
a data acquiring module, configured to acquire and output real-time angle values of an included angle α₁, an included angle α₂ and an included angle θ₃ in real time, in which the included angle α₁ is an included angle between the first vector and the third vector, the included angle α₂ is an included angle between the second vector and the third vector, and the included angle θ₃ is an included angle between the first vector and the second vector; and
a determining module, configured to determine a relationship among the included angle α₁, the included angle α₂ and the included angle θ₃, and determine the lunar calibration timing, according to the real-time angle values of the included angle α₁, the included angle α₂ and the included angle α₃.

The disclosure has the following advantages:
(1) a solution for calculating a passive lunar calibration timing of a low-earth-orbit satellite is disclosed, in which a scene establishment is simple, and a relationship between each vector and an included angle is clear, which is convenient for subsequent calculation of data;
(2) a solution for calculating a passive lunar calibration timing of a low-earth-orbit satellite is disclosed, which can calculate a passive lunar calibration timing of a satellite system and a corresponding terrestrial latitude and longitude, which is helpful for a ground application system to conduct a data calibration work, and can use a multiplex of the deep space field of view as a lunar calibration field of view, which improves a use efficiency of the satellite system;
(3) a solution for calculating a passive lunar calibration timing of a low-earth-orbit satellite is disclosed, which analyzes parameters such as a lunar calibration timing. A research result is applied to a certain low-earth-orbit satellite, which verifies correctness and rationality of the solution, and provides data support for long-term monitoring of stability of a remote sensing satellite detector and subsequent establishment of a Chinese lunar radiation model.

### BRIEF DESCRIPTION OF THE DRAWINGS

FIG. 1 is a flowchart illustrating steps of a method for calculating a passive lunar calibration timing of a low-earth-orbit satellite in embodiments of the disclosure;
FIG. 2 is a vector construction diagram in embodiments of the disclosure.

### DETAILED DESCRIPTION

In order to make the purpose, technical solutions and advantages of the present disclosure more clear, the embodiments of the present disclosure will be further described below in connection with the accompanying drawings.

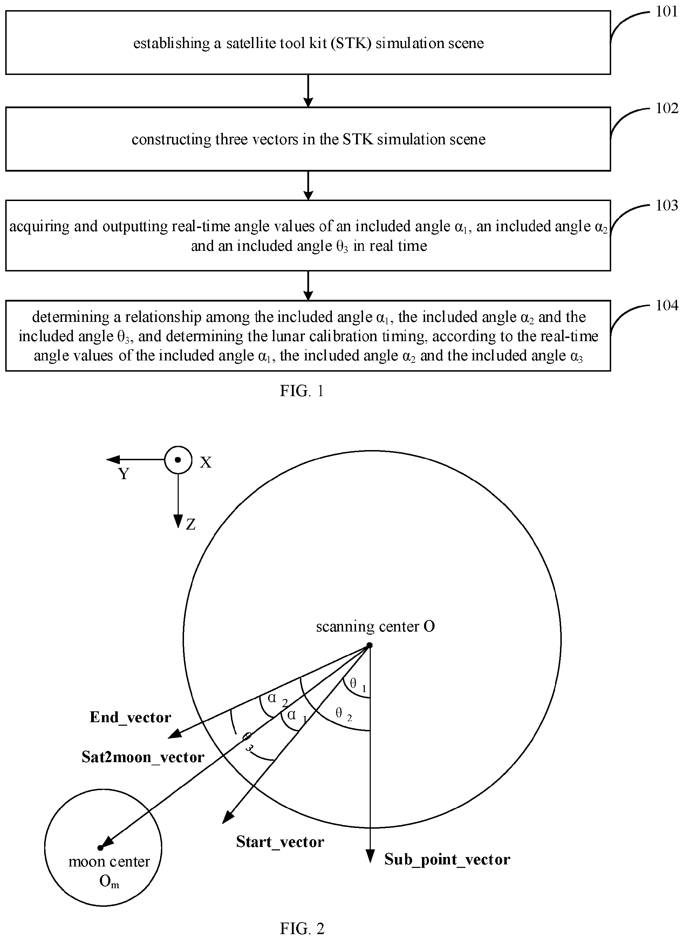

As illustrated in FIG. 1, the method for calculating a passive lunar calibration timing of a low-earth-orbit satellite in embodiments includes the following steps.

At step 101, a satellite tool kit (STK) simulation scene is established.

In the embodiments, an orbit semi-major axis, an eccentricity, an orbit inclination angle, an argument of perigee, a right ascension of ascending node and a mean anomaly may be acquired; and the STK simulation scene may be established by taking the orbit semi-major axis, the eccentricity, the orbit inclination angle, the argument of perigee, the right ascension of ascending node and the mean anomaly as input parameters of the STK.

Preferably, values of the orbit semi-major axis, the eccentricity, the orbit inclination angle, the argument of perigee, the right ascension of ascending node and the mean anomaly may be as follow: semi-major axis = 7028.14 km, eccentricity = 0.0010691°, orbit inclination angle = 98.45°, argument of perigee = 253.74°, right ascension of ascending node = 225.84°, mean anomaly = 45.22°.

At step 102, three vectors are constructed in the STK simulation scene.

In the embodiment, a first vector is a deep space field of view start vector, a second vector is a deep space end vector, and a third vector is a vector from the satellite to the moon. Preferably, as illustrated in FIG. 2, a process of establishing each vector is as follow.
1) A circumferential scanning disk coordinate system O-XYZ is established by taking a scanning center as an origin O. An X-axis is a flight direction perpendicular outwardly to a paper surface, a Z-axis points to a geocenter, and a Y-axis constitutes a right-handed system with the X-axis and the Z-axis.
2) A sub-satellite point imaging vector Sub_point_vector is determined. The sub-satellite point imaging vector Sub_point_ vector coincides with the Z-axis, with the origin O as a start point.
3) A deep space field of view start vector Start_vector is constructed by rotating the sub-satellite point imaging vector Sub_point_ vector counterclockwise at an angle θ₁ towards an X direction.
4) A deep space end vector End_vector is constructed by rotating the sub-satellite point imaging vector Sub_point_vector counterclockwise at an angle θ₂ towards an X direction.
5) A vector from the satellite to the moon sat2moon_vector is constructed by taking the origin O as a start point and a moon center Oₘ as an end point.

It needs to be noted that, values of the angle θ₁ and the angle θ₂ are determined based on a load requirement.

At step 103, the real-time angle values of the included angle α₁, the included angle α₂ and the included angle θ₃ are acquired and output in real time.

In the embodiments, the included angle α₁ is an included angle between the first vector and the third vector, the included angle α₂ is an included angle between the second vector and the third vector, and the included angle θ₃ is an included angle between the first vector and the second vector.

At step 104, according to the real-time angle values of the included angle α₁, the included angle α₂ and the included angle α₃, a relationship among the included angle α₁, the included angle α₂ and the included angle θ₃ is determined, and the lunar calibration timing is determined.

In the embodiments, in response to determining α₁+α₂=θ₃ according to the real-time angle values of the included angle α₁, the included angle α₂ and the included angle α₃, it is determined that the moon enters the deep space field of view, and a current UTC time is taken as the lunar calibration timing.

In a preferred embodiment of the disclosure, when the real-time angle values of the included angle α₁, the included angle α₂ and the included angle θ₃ are acquired and output in real time at step 103, the method further may include: acquiring and outputting the current UTC time and a current sub-satellite point longitude and latitude. Correspondingly, after taking the current UTC time as the lunar calibration timing, the method may further include: determining and outputting a sub-satellite point longitude and latitude corresponding to the current UTC time.

It needs to be noted that steps 101 to 103 may be achieved in an STK software, and step 104 may be achieved in a MATLAB software.

On the basis of the above embodiment, a system for calculating a passive lunar calibration timing of a low-earth-orbit satellite is further provided in the disclosure, and includes a simulation module, a vector constructing module, a data acquiring module and a determining module. The simulation module is configured to establish a satellite tool kit (STK) simulation scene. The vector constructing module is configured to construct three vectors in the STK simulation scene. A first vector is a deep space field of view start vector, a second vector is a deep space end vector, and a third vector is a vector from the satellite to the moon. The data acquiring module is configured to acquire and output real-time angle values of an included angle α₁, an included angle α₂ and an included angle θ₃ in real time. The included angle α₁ is an included angle between the first vector and the third vector, the included angle α₂ is an included angle between the second vector and the third vector, and the included angle θ₃ is an included angle between the first vector and the second vector. The determining module is configured to determine a relationship among the included angle α₁, the included angle α₂ and the included angle θ₃, and determine the lunar calibration timing, according to the real-time angle values of the included angle α₁, the included angle α₂ and the included angle α₃.

Since system embodiments correspond to method embodiments, they are described briefly, which refer to descriptions of the method embodiments.

Although the invention has been disclosed in preferred embodiments, they are not intended to limit the invention, and those skilled in the art may make possible variations and amendments to the technical solution of the invention without departing from the spirit and scope of the invention. Therefore, any simple amendment, equivalent change and modification made to contents that do not depart from the technical solution of the invention for the above embodiments in accordance with the technical substance of the invention are all within the protection scope of the technical solution of the invention.

The contents not described in the description of the invention are well-known technologies of those skilled in the art.

## Claims

1. A method for calculating a passive lunar calibration timing of a low-earth-orbit satellite, comprising:
establishing a satellite tool kit (STK) simulation scene;
constructing three vectors in the STK simulation scene, wherein a first vector is a deep space field of view start vector, a second vector is a deep space end vector, and a third vector is a vector from the satellite to the moon;
acquiring and outputting real-time angle values of an included angle α₁, an included angle α₂ and an included angle θ₃ in real time, wherein the included angle α₁ is an included angle between the first vector and the third vector, the included angle α₂ is an included angle between the second vector and the third vector, and the included angle θ₃ is an included angle between the first vector and the second vector; and
determining a relationship among the included angle α₁, the included angle α₂ and the included angle θ₃, and determining the lunar calibration timing, according to the real-time angle values of the included angle α₁, the included angle α₂ and the included angle α₃.

2. The method according to claim 1, wherein establishing the STK simulation scene comprises:
acquiring an orbit semi-major axis, an eccentricity, an orbit inclination angle, an argument of perigee, a right ascension of ascending node and a mean anomaly; and
establishing the STK simulation scene by taking the orbit semi-major axis, the eccentricity, the orbit inclination angle, the argument of perigee, the right ascension of ascending node and the mean anomaly as input parameters of the STK.

3. The method according to claim 1, wherein constructing the three vectors in the STK simulation scene comprises:
establishing a circumferential scanning disk coordinate system O-XYZ by taking a scanning center as an origin O, wherein an X-axis is a flight direction perpendicular outwardly to a paper surface, a Z-axis points to a geocenter, and a Y-axis constitutes a right-handed system with the X-axis and the Z-axis;
determining a sub-satellite point imaging vector Sub_point_ vector, wherein the sub-satellite point imaging vector Sub_point_vector coincides with the Z-axis, with the origin O as a start point;
constructing the deep space field of view start vector Start_vector by rotating the sub-satellite point imaging vector Sub_point_vector counterclockwise at an angle θ₁ towards an X direction;
constructing the deep space end vector End_vector by rotating the sub-satellite point imaging vector Sub_point_vector counterclockwise at an angle θ₂ towards an X direction; and
constructing the vector from the satellite to the moon sat2moon_vector by taking the origin O as a start point and a moon center Oₘ as an end point.

4. The method according to claim 3, wherein values of the angle θ₁ and the angle θ₂ are determined based on a load requirement.

5. The method according to claim 1, wherein determining the relationship among the included angle α₁, the included angle α₂ and the included angle θ₃, and determining the lunar calibration timing, according to the real-time angle values of the included angle α₁, the included angle α₂ and the included angle α₃, comprises:
in response to determining α₁+α₂=θ₃ according to the real-time angle values of the included angle α₁, the included angle α₂ and the included angle α₃, determining that the moon enters the deep space field of view, and taking a current UTC time as the lunar calibration timing.

6. The method according to claim 5, wherein while acquiring and outputting the real-time angle values of the included angle α₁, the included angle α₂ and the included angle α₃ in real time, the method further comprises: acquiring and outputting the current UTC time and a current sub-satellite point longitude and latitude.

7. The method according to claim 6, wherein after taking the current UTC time as the lunar calibration timing, the method further comprises: determining and outputting a sub-satellite point longitude and latitude corresponding to the current UTC time.

8. The method according to claim 1, wherein steps of establishing the STK simulation scene, constructing the three vectors in the STK simulation scene and acquiring and outputting the real-time angle values of the included angle α₁, the included angle α₂ and the included angle θ₃ in real time are achieved in an STK software.

9. The method according to claim 1, wherein a step of determining the relationship among the included angle α₁, the included angle α₂ and the included angle θ₃, and determining the lunar calibration timing, according to the real-time angle values of the included angle α₁, the included angle α₂ and the included angle α₃, is achieved in a MATLAB software.

10. A system for calculating a passive lunar calibration timing of a low-earth-orbit satellite, comprising:
a simulation module, configured to establish a satellite tool kit (STK) simulation scene;
a vector constructing module, configured to construct three vectors in the STK simulation scene, wherein a first vector is a deep space field of view start vector, a second vector is a deep space end vector, and a third vector is a vector from the satellite to the moon;
a data acquiring module, configured to acquire and output real-time angle values of an included angle α₁, an included angle α₂ and an included angle θ₃ in real time, wherein the included angle α₁ is an included angle between the first vector and the third vector, the included angle α₂ is an included angle between the second vector and the third vector, and the included angle θ₃ is an included angle between the first vector and the second vector; and
a determining module, configured to determine a relationship among the included angle α₁, the included angle α₂ and the included angle θ₃, and determine the lunar calibration timing, according to the real-time angle values of the included angle α₁, the included angle α₂ and the included angle α₃.
